(19) Europäisches Patentamt / European Patent Office / Office européen des brevets

(11) **EP 2 096 455 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(51) Int Cl.:
**G01S 19/05** *(2010.01)*     **G01S 19/27** *(2010.01)*

(21) Anmeldenummer: **09002090.0**

(22) Anmeldetag: **14.02.2009**

(54) **Verfahren und Vorrichtung zum Generieren einer Parametrisierung von Satellitenorbits und/oder Satellitenuhrenkonrrekturen eines Satelliten**

Method and device for generating parameters for satellite orbits and/or satellite clock corrections for a satellite

Procédé et dispositif de génération d'un paramétrage d'orbites satellites et/ou des corrections de montres satellites d'un satellite

(84) Benannte Vertragsstaaten:
**DE FR GB IT**

(30) Priorität: **27.02.2008 DE 102008011388**

(43) Veröffentlichungstag der Anmeldung:
**02.09.2009 Patentblatt 2009/36**

(73) Patentinhaber: **Airbus DS GmbH**
**82024 Taufkirchen (DE)**

(72) Erfinder: **Frankenberger, Harald, Dr.**
**85521 Ottobrunn (DE)**

(74) Vertreter: **Binder, Karin Meta**
**Airbus Defence and Space GmbH**
**Patentabteilung**
**81663 München (DE)**

(56) Entgegenhaltungen:
**US-A1- 2006 290 566**

- **PAULA KORVENOJA ET AL: "Efficient Satellite Orbit Approximation", PROC. OF THE 13TH INT. TECHNICAL MEETING OF THE SATELLITE DIVISION OF THE INSTITUTE OF NAVIGATION (ION GPS 2000), 19. September 2000 (2000-09-19), Seiten 1930-1937, XP055063032, Salt Lake City, UT, USA**
- **JAY H. KWON ET AL: "Kinematic Orbit Determination of Low Earth Orbiter using Triple Differences", PROC. OF THE 2002 NATIONAL TECHNICAL MEETING OF THE INSTITUTE OF NAVIGATION, 28. Januar 2002 (2002-01-28), Seiten 762-777, XP055063037, San Diego, CA , USA**

**Beschreibung**

Die Erfindung betrifft ein Verfahren und eine Vorrichtung zum Generieren einer Parametrisierung von Satellitenorbits und/oder Satellitenuhrenkorrekturen eines Satelliten.

Für die Bestimmung der Position eines Benutzerendgeräts mittels Pseudoentfernungen zu Navigationssatelliten ist ein entsprechendes Wissen über die Satellitenorbits und die entsprechenden Satellitenuhren notwendig, wobei beide Informationen zeitabhängig sind. Auf einem derartigen Wissen beruht das GPS-System (Global Positioning System). Der übliche Weg diese Informationen bereitzustellen, besteht in der satellitengestützten Verbreitung sowohl von sog. oskulierenden keplerschen Orbitalelementen einschließlich einiger weiterer Korrekturen zur Repräsentation der Satellitenorbits als auch von Polynomen zweiten Grades für die Korrektur der satelliteneigenen Zeit. Diese Informationen sind Teil der sog. Navigationsnachricht. Beide Informationen stellen lediglich temporär nutzbare Approximationen dar. Dies bedeutet, dass ihre Gültigkeit grundsätzlich mit ihrer Verbreitung beginnt und die Informationen mit dem Empfang der nächsten gültigen Navigationsnachricht hinfällig sind, denn obwohl eine spätere Verwendung der Information möglich ist, nimmt die Qualität der Approximation mit zunehmender Verwendungsdauer ab. Dieses Vorgehen ist in entsprechender Weise auch für das zu GPS alternative Satellitennavigationssystem GLONASS gültig, nur dass statt der keplerschen Elemente hierbei Positionen und Geschwindigkeiten versendet werden, die als Anfangswerte zur numerischen Integration der Satellitenbewegungsgleichungen dienen.

Die bereitgestellten Satellitenorbits und die Satellitenuhrenkorrekturen sind somit stückweise definierte Funktionen der Zeit, wobei keine Nebenbedingung beim Übergang von einem Zeitintervall der Zeitlinie zu den angrenzenden Zeitintervallen besteht. Dies kann als eine Verallgemeinerung der bekannten stückweise polynomialen Splines betrachtet werden.

Das Verfahren, die notwendigen Informationen zur Bestimmung der Position des Benutzerendgeräts auf die oben beschriebene Weise bereitzustellen, weist einige Nachteile auf:

- Es besteht der Nachteil einer Diskontinuität beim Übergang von einer Navigationsnachricht zu einer anderen, welche sich in Sprüngen von bis zu mehreren Metern in der ermittelten Satellitenposition und einigen Nanosekunden in der ermittelten Satellitenuhrzeit bemerkbar machen kann.
- Die Aktualisierung der notwendigen Information erfordert den Empfang aller Informationen des zugehörigen Ausschnittes in einer Navigationsnachricht. Die Verwendung von früheren Informationen ist nicht vorgesehen.
- In ungünstigsten Fall ist die Bestimmung der Position des Benutzerendgeräts nicht möglich bevor eine gültige Navigationsnachricht vollständig empfangen wurde. Die zugehörige Zeitdauer bestimmt wesentlich die Zeit bis zur ersten Peilung des Benutzerendgeräts, auch Akquisitionszeit oder im Englischen time to first fix genannt.
- Die Steigerung der Genauigkeit der Navigationsnachricht ist nicht möglich ohne die Übertragungshäufigkeit zu erhöhen.
- Die Navigationsnachricht ist speziell auf die Darstellung keplerscher Orbits ausgerichtet, d.h. ihre Flexibilität zur Beschreibung andersgearteter Trajektorien ist sehr gering.

Es gibt einige Situationen wo diese Nachteile die Navigation mit Satelliten verkomplizieren oder sogar verhindern, z.B.:

- Die Überwachung von potentiellen Bewegungen von sog. Referenzstationen mittels zeitlich differentielle Techniken gestaltet sich wegen der Diskontinuität beim Übergang von einer Navigationsnachricht zu einer anderen schwierig, da die dabei auftretenden Sprünge das restliche differentielle Verhalten dominieren.
- Ein sog. Kaltstart kann für verschiedenste Navigationsanwendungen sehr hohe Anforderungen an die Akquisitionszeit nach sich ziehen. Hier sind beispielsweise die Verfolgung von Walen durch am Tier angebrachte Empfänger, der Unterwasserstart von Unterseeboot-gestützten Raketen bzw. Marschflugkörpern, der Abgang von Flugzeuggestützten Abstandswaffen oder die Fahrzeugnavigation in städtischen Gebieten zu nennen. Allen gemein sind die Navigation mittels Satelliten und die Anforderung nach einer möglichst schnellen ersten Peilung, die jedoch in der Regel einem Kaltstart folgen muss, da vor dem entsprechenden Ereignis eine Sicht auf die Satelliten entweder unmöglich oder zumindest erschwert ist.

Aus der US 2006/0290566 A1 ist ein Verfahren zum Generieren einer Parametrisierung von Satellitenorbits und/oder Satellitenuhrenkorrekturen eines Satelliten bekannt, das Spline- bzw. Hermitesch-Polynome zur Beschreibung von Satellitenorbits und/oder Satellitenuhrenkorrekturen verwendet.

Aus Paula Korvenoja et al.: "Efficient Satellite Orbit Approximation", Proc. of the 13th Int. Technical Meeting of the Satellite Division of The Institute of Navigation (ION GPS 2000), 19. September 2000, Seiten 1930 bis 1937 ist es bekannt, zur beschleunigten Bestimmung einer Satellitenposition ein Ephemeriden-Orbitmodell mittels Kurven anzunähern. Es wird eine stückweise polynomiale Interpolation, z.B. mittel Splines und Hermitesch-Polynomen, vorgeschlagen.

Aus Jay H Kwon et al.: "Kinematic Orbit Determination of Low Earth Orbiter using Triple Differences", Proc. of the 2002 National Technical Meeting of The Institute of Navigation, 28. Januar 2002, Seiten 762-777 ist es bekannt, zur Bestimmung des Orbits mehrere unterschiedliche Phasen und deren Differenzen in einem Algorithmus zu verarbeiten.

Es ist daher Aufgabe der vorliegenden Erfindung, ein Verfahren und eine Vorrichtung zum Generieren einer hinreichend glatten und sehr flexiblen Parametrisierung von Satellitenorbits und/oder Satellitenuhrenkorrekturen eines Satelliten anzugeben, welche eine Erhöhung der Genauigkeit der bei dem Benutzerendgerät berechenbaren Satellitenposition ermöglicht.

Diese Aufgaben werden durch die Merkmale der unabhängigen Patentansprüche der Erfindung gelöst. Vorteilhafte Ausgestaltungen der Erfindung ergeben sich aus den abhängigen Patentansprüchen.

Bei dem erfindungsgemäßen Verfahren zum Generieren einer hinreichend glatten und sehr flexiblen Parametrisierung von Satellitenorbits und/oder Satellitenuhrenkorrekturen eines Satelliten ist zur Beschreibung der Satellitenorbits und/oder der Satellitenuhrenkorrekturen ein erstes fortschreitendes System differenzierbarer Funktionen (nachfolgend als erstes Funktionensystem bezeichnet) mit hoher Approximationsgüte und einem langen Wirkungsbereich vorgesehen. Die aus dem ersten Funktionensystem parametrisierten Satellitenorbits und/oder Satellitenuhrenkorrekturen werden von einer Bodenrecheneinheit an einen oder mehrere Satelliten und dann an ein Benutzergerät übertragen oder aber die Übertragung erfolgt ohne Nutzung des Raum-Segmentes nur über eine Bodeninfrastruktur. Erfindungsgemäß ist zur Parametrisierung der Satellitenorbits und/oder der Satellitenuhrenkorrekturen zusätzlich ein zweites fortschreitendes System (zweites Funktionensystem) zumindest stetiger Funktionen mit moderater Approximationsgüte und sehr kurzem Wirkungsbereich vorgesehen, das eine Konversion zu dem ersten Funktionensystem erlaubt. Die aus dem zweiten Funktionensystem parametrisierten Satellitenorbits werden zusätzlich an das Benutzergerät übertragen.

Das erste und das zweite Funktionensystem umfassen eine Sequenz von Funktionen $\left(\phi_i^{k,p}\left(\cdot;(\tau_l)_{l\in N}\right)\right)_{i\in N}$ mit den folgenden zwei Eigenschaften:

für alle $i \in N$ ist die Funktion $\phi_i^{k,p}\left(\cdot;(\tau_l)_{l\in N}\right)$ p-fach stetig differenzierbar, so dass gilt:

$$\phi_i^{k,p}\left(\cdot;(\tau_l)_{l\in N}\right)\in C^p(R),$$

für alle $i \in N$ ist ein Träger der Funktion $\phi_i^{k,p}\left(\cdot;(\tau_l)_{l\in N}\right)$ in einem abgeschlossenen Intervall enthalten, das durch seine Endpunkte $\tau_i, \tau_{i+k}$ definiert ist, so dass gilt:

$$\text{supp}\left(\phi_i^{k,p}\left(\cdot;(\tau_l)_{l\in N}\right)\right)\subseteq\left[\tau_i,\tau_{i+k}\right]$$ wobei für jede Function f der Träger definiert ist durch $\text{supp}(f):=\overline{\{x\in R|f(x)\neq 0\}};$

Dabei bezeichnen: N natürliche Zahlen inklusive der Null; R reelle Zahlen; p und k gegebene natürliche Zahlen; $\alpha$ eine positive Zahl und $(\tau_l)_{l\in N}$ ist eine unendliche Folge sogenannter Knoten, welche nicht notwendigerweise paarweise unterschiedlich sind; und wobei für alle $l \in N$ gilt: $\tau_{l+k} - \tau_l > \alpha$.

Eine erfindungsgemäße Vorrichtung zum Generieren einer hinreichend glatten und sehr flexiblen Parametrisierung von Satellitenorbits und/oder Satellitenuhrenkorrekturen weist Mittel zur Durchführung des erfindungsgemäßen Verfahrens auf.

Durch das erfindungsgemäße Vorgehen können Sprünge in der verbreiteten Satellitenposition und -geschwindigkeit beim Wechsel der von einem Navigationssatelliten versendeten Nachrichten eliminiert werden, wodurch Position und Geschwindigkeit des Benutzerendgeräts einfacher und genauer bestimmbar sind. Außerdem werden hierdurch Prozessierungen ermöglicht, die auf zeitlich differentiellen Techniken beruhen. Darüber hinaus erlaubt das erfindungsgemäße Verfahren die Verkürzung der notwendigen Übertragungsdauer und -häufigkeit der Navigationsnachricht von der Bodenstation zum Satelliten. Im Ergebnis wird dadurch auch eine Steigerung der Genauigkeit der Navigationsnachricht erreichbar, ohne die Übertragungsdauer und -häufigkeit zu erhöhen. Zudem erzielt das erfindungsgemäße Verfahren eine viel größere Flexibilität bei der Parametrisierung von Satellitenorbits und/oder der Satellitenuhrenkorrekturen. So können auch andere Trajektorien als die üblichen Orbits behandelt werden, wie z.B. die von nichtstationären Pseudolites. (Das sind boden-gestützte Zusatzsender die alleine oder in Ergänzung zu Navigationssatelliten zum Einsatz kommen können.)

Gemäß einer Ausgestaltung der Erfindung wird die Konversion durch das Benutzerendgerät vorgenommen. Hierbei ist es zweckmäßig, wenn für das zweite Funktionensystem alle an das Benutzersystem zu übertragenden Daten in dem Satelliten aus dem ersten Funktionensystem gewonnen werden. Hierdurch wird der Übertragungsaufwand von der Bodenrecheneinheit zu dem Satelliten durch das zweite Funktionensystem nicht erhöht. Durch das Vorsehen des zweiten Funktionensystems kann die Zeit, bis zu der die die erste Navigationsinformation verfügbar ist, d.h. die time to first fix, wesentlich verkürzt werden.

Das erfindungsgemäße Verfahren zeichnet sich weiterhin dadurch aus, dass die Funktionen des ersten und/oder zweiten Funktionensystems hinreichend glatt sind, d.h. je nach Erfordernis z.B. stetig oder differenzierbar oder mehrfach stetig differenzierbar oder sogar unendlich oft stetig differenzierbar sind.

Es ist ferner zweckmäßig, dass es für beide Funktionensysteme je einen vorgegebenen (endlichen) Wert gibt, der die Anzahl der Funktionen, die in einem beliebig gewählten Zeitpunkt von Null verschieden sind, begrenzt. Hierdurch benötigt ein Benutzerendgerät zu jedem Zeitpunkt höchstens eine fest vorgegebene Menge an Informationen.

Die Approximation der Satellitenorbits und/oder der Satellitenuhrenkorrekturen erfolgt gemäß einer weiteren zweckmäßigen Ausgestaltung des erfindungsgemäßen Verfahrens fortschreitend. Dies bedeutet, wird mit einer Approximation zu einem speziellen Zeitintervall gestartet, dann impliziert das Fortschreiten dieses Zeitintervalls um eine vorgegebene Zeitspanne, dass einige Funktionen des Funktionensystems, die zum Start vonnöten waren, nun nicht mehr benötigt werden. Dies bedeutet, diese leisten nun nie mehr einen Beitrag zu einem betrachteten Zeitpunkt, während einige neue Funktionen erstmalig einen Beitrag leisten.

Gemäß einer weiteren Ausgestaltung erlauben die Instruktionen für die Erzeugung des ersten und des zweiten Funktionensystems die Steuerung der Güte der Approximation und/oder die oben erwähnte Anzahl der Funktionen. Für die Ermöglichung eines sog. schnellen Kaltstarts, d.h. einer geringen Zeit bis zu der die erste Peilung vorliegt, sollte eine einfache und taugliche Konversion zwischen dem ersten und zweiten Funktionensystem in beiden Richtungen möglich sein.

Als erstes und/oder zweites Funktionensystem können gemäß einer Ausgestaltung der Erfindung polynomiale B-Splines, nicht-gleichförmige rationale B-Splines (sog. NURBS), verallgemeinerte B-Splines (wie beispielsweise die sog. Tschebycheff-B-Splines) oder sog. Wavelets mit lokalem Träger verwendet werden.

Zweckmäßigerweise wird die Approximation der Satellitenorbits und/oder der Satellitenuhrenkorrekturen mit einer Linearkombination der Funktionen des ersten Funktionensystems ermittelt.

Hierfür wir zunächst zu einem beliebigen Startintervall eine approximierende Linearkombination einer gegebenen Funktion nur für dieses Startintervall ermittelt. Dies liefert die initialen Koeffizienten des ersten Funktionensystems. Ferner wird ein dem Startintervall folgendes Folgeintervall derart ermittelt, dass die Endpunkte des Folgeintervalls von den Endpunkten des Startintervalls verschieden sind. Dann wird die Approximation der gegebenen Funktion für das Folgeintervall ermittelt, indem außer den bisher erlangten Koeffizienten nur Informationen der Funktion für das Folgeintervall einfließen. Alle weiteren Koeffizienten für weitere Folgeintervalle werden induktiv in analoger Weise bestimmt.

Bei dem erfindungsgemäßen Verfahren können ferner sich unterscheidende erste und zweite Funktionensysteme zur Approximation der Satellitenorbits und der Satellitenuhrenkorrekturen verwendet werden. Es können auch unterschiedliche erste und/oder zweite Funktionensysteme zur Approximation der Satellitenorbits und der Satellitenuhrenkorrekturen unterschiedlicher Satelliten verwendet werden.

Werden gemäß einer weiteren Ausgestaltung die ermittelten Koeffizienten und weitere notwendige Parameter, gleichförmig über die Zeit verteilt, so kann gemäß weiterer Ausgestaltungen die Zeit, bis die Position der Satelliten im Benutzerendgerät bestimmbar ist minimiert werden, insbesondere über eine eigenständige Übertragungsstruktur und/oder über das zweite Funktionensystem.

Bei dem erfindungsgemäßen Verfahren können die fortschreitenden Funktionensysteme direkt sowohl innerhalb des Berechnungsprozesses für restituierte präzise Orbits und Uhren als auch innerhalb des Prozesses zur Vorausberechnung von Orbits und Uhrenkorrekturen ausgenutzt werden. Dies weist den Vorteil auf, dass Orbit- und Uhrennachrichten erzeugt werden können, welche a priori bis zu einem gewissen Grad glatt sind. Außerdem können die Koeffizienten direkt verwendet werden und somit die Orbit- und Uhrkorrekturdaten verlustfrei bereitgestellt werden.

Die Erfindung wird nachfolgend näher unter Bezugnahme auf die Zeichnungen erläutert. Es zeigen:

Fig. 1     normalisierte polynomiale B-Splines verschiedener Ordnungen im zeitlichen Verlauf,

Fig. 2     Kardinal-B-Splines der vierten Ordnung, welche zu einem gleichen Intervall einen Beitrag leisten,

Fig. 3     eine zeitliche Darstellung der Approximationsfehler sämtlicher GPS-Satelliten des Jahres 2005 für die Tage 278 bis 280,

Fig. 4     einen vergrößerten Ausschnitt der Approximationsfehler des Jahres 2005 für die Tage 278 bis 280,

Fig. 5     eine zeitliche Darstellung der Approximationsfehler aller GPS-Satelliten des Jahres 2006 für die Tage 146 bis 150,

Fig. 6     die Approximationsfehler aller GPS-Satelliten im zeitlichen Verlauf des Jahres 2006 für die Tage 339 bis 341,

Fig. 7    die Approximationsfehler aller GPS-Satelliten im zeitlichen Verlauf des Jahres 2007 für die Tage 243 bis 245,

Fig. 8    eine vergrößerte Darstellung der Approximationsfehler im zeitlichen Verlauf des Jahres 2007 für die Tage 257 bis 259 mit einem Maximum von 15 mm, und

Fig. 9    die Approximationsfehler aller verfügbaren GPS-Satelliten im zeitlichen Verlauf des Jahres 2005, wobei 61 Tage beginnend vom 1. März 2005 dargestellt sind.

Das erfindungsgemäße Verfahren zum Generieren einer hinreichend glatten und sehr flexiblen Parametrisierung von Satellitenorbits und/oder Satellitenuhrenkorrekturen eines Satelliten zur Steigerung der Genauigkeit der Navigationsnachricht beruht auf der Verwendung eines Systems von Funktionen, welche abhängig von der Zeit sind, und die folgenden Eigenschaften aufweisen:

1. Jede Funktion des Funktionensystems ist ausreichend glatt über die vollständige Zeitlinie, d.h. je nach Erfordernis z.B. stetig oder differenzierbar oder mehrfach stetig differenzierbar oder sogar unendlich oft stetig differenzierbar.

2. Die Anzahl der Funktionen in dem Funktionensystem, welche zu einem beliebigen Zeitpunkt einen Beitrag leisten, ist durch eine Konstante begrenzt. Eine Funktion trägt zu einem Zeitpunkt etwas bei, wenn deren Wert zu diesem Punkt ungleich Null ist.

3. Der Approximationsprozess wird in einer fortschreitenden Weise bewerkstelligt. Dies bedeutet, wird mit einer Approximation, die zu einem bestimmten Zeitintervall korrespondiert gestartet, dann impliziert das Fortschreiten des Intervalls um eine vorgegebene Zeitspanne, dass einige Funktionen des Systems (die "älteren") obsolet werden. Dies bedeutet, diese tragen nie mehr einen Beitrag zu einem relevanten Zeitpunkt bei. Einige "neue" Funktionen hingegen leisten erstmalig einen Beitrag. Die aus den Funktionen resultierenden Koeffizienten, welche notwendig für die Approximation sind und zu den Funktionen "zwischen" den obsoleten und den neuen Funktionen korrespondieren, werden hierdurch nicht beeinflußt.

4. Die Instruktionen zum Erzeugen des Funktionensystems müssen die Steuerung der Qualität der Approximation und die Auswahl der Anzahl von Funktionen in dem System, welche einen Beitrag zu einem beliebigen Zeitpunkt leisten, erlauben. Letzteres bedeutet die Auswahl der oben erwähnten Konstante. Um einen schnellen Kaltstart, d.h. eine kurze time to first fix zu erzielen, sollte eine einfache und geeignete Konversion zwischen verschiedenen Ausprägungen solcher Funktionensysteme in beiden Richtungen möglich sein.

Eine generelle Familie von Funktionensystemen, welche die oben aufgezählten Punkte 1, 2 und 3 vollständig und den Punkt 4 teilweise erfüllen, ist durch folgende Definition gegeben, welche als fortschreitendes Funktionensystem (sog. Advancing Function System) bezeichnet wird:

Definition 1:

Mit $N$ werden im folgenden die natürlichen Zahlen inklusive der Null und mit R die reellen Zahlen bezeichnet. Gegeben sind die natürlichen Zahlen p und k, eine positive Zahl $\alpha$ und eine unendliche Folge sog. Knoten $(\tau_l)_{l \in N}$, welche nicht notwendigerweise paarweise unterschiedlich sind und wobei für alle $l \in N$ gilt: $\tau_{l+k} - \tau_l > \alpha$. Die Zahl p darf auch unendlich sein. Die Zahl $\alpha$ kann als wesentliche Breite der Knoten bezeichnet werden.

Eine Sequenz von Funktionen $\left( \phi_i^{k,p}\left( \cdot ; \left( \tau_l \right)_{l \in N} \right) \right)_{i \in N}$ wird als fortschreitendes Funktionensystem bezeichnet, wenn die folgenden zwei Eigenschaften erfüllt sind:

1. Für alle $i \in N$ ist die Funktion $\phi_i^{k,p}\left( \cdot ; \left( \tau_l \right)_{l \in N} \right)$ p-fach stetig differenzierbar, d.h.

$$\phi_i^{k,p}\left( \cdot ; \left( \tau_l \right)_{l \in N} \right) \in C^p(R).$$

2. Für alle $i \in N$ ist der sog. Träger der Funktion $\phi_i^{k,p}\left( \cdot ; \left( \tau_l \right)_{l \in N} \right)$ in dem abgeschlossenen Intervall enthalten, das durch seine Endpunkte $\tau_i$, $\tau_{i+k}$ definiert ist, d.h.

$$\text{supp}\left(\phi_i^{k,p}\left(\cdot;(\tau_l)_{l\in N}\right)\right) \subseteq \left[\tau_i, \tau_{i+k}\right],$$

wobei für jede Funktion f der Träger definiert ist durch supp (f):=$\overline{\{x\in R|f(x)\neq 0\}}$.

Nachfolgend wird die Folge $(\tau_l)_{l\in N}$ durch Weglassen von "$\in N$" abgekürzt. Wann immer im Text der Begriff "glatt" verwendet wird, so meint dies, dass die involvierten Funktionen einer gewissen, nicht näher spezifizierten Differenzierbarkeitsklasse angehören.

Beispiele solcher Familien von Funktionensystemen sind polynomiale B-Splines, nicht-gleichförmige rationale B-Splines (sog. NURBS) und verallgemeinerte B-Splines (wie beispielsweise die sog. Tschebycheff-B-Splines). Zusätzlich können sog. Wavelets mit lokalem Träger in diesen Rahmen passen.

Die Annäherung wird allgemein durch eine Linearkombination der Funktionen des gewählten fortschreitenden Funktionensystems bewerkstelligt. Die Koeffizienten dieser Linearkombination werden auf geeignete Weise ermittelt. Die Ermittlung hängt wesentlich von dem zu lösenden Problem ab. Beispielsweise kann die Diskretisierung des kontinuierlichen Problems durch Galerkin- oder Kollokations-Methoden gelöst werden und die Lösung des resultierenden diskreten Problems im Sinne der geringsten Quadrate oder nach Tschebycheff erfolgen. Auch wenn die Approximationsfunktion eine unendliche Linearkombination ist, stellt die oben gegebene Definition sicher, dass die Evaluation zu jedem Zeitpunkt zu einer endlichen Summe führt.

Nachfolgend wird die Verwendung eines fortschreitenden Funktionensystems zur Annäherung einer beliebigen gegebenen Funktion f auf der Zeitlinie in einer fortschreitenden Weise beschrieben.

Zunächst wird ein beliebiges anfängliches Zeitintervall der Form $[\tau_i,\tau_{i+j}]$ gewählt, wobei gilt: $\tau_{i+j} - \tau_i > 0$. Auf gewöhnliche Weise wird die anfängliche Approximation der auf dieses Startintervall beschränkten gegebenen Funktion ermittelt. Dies bedeutet, es werden lediglich Informationen der Funktion f für Punkte innerhalb dieses Startintervalls verwendet. Somit ist der Anfang der Konstruktion dargestellt. Nun kann der weitere Prozess iterativ beschrieben werden. Dazu wird angenommen, dass die Approximation vom Startintervall ausgehend bis zu einem zuvor aktuellen Zeitintervall $I_{prev}$ bereits ermittelt ist. Anschließend wird das zuvor aktuelle Zeitintervall $I_{prev}$ derart fortgeschrieben, dass die neuen Intervallendpunkte von denen des zugehörigen alten Intervalls $I_{prev}$ unterschiedlich sind. Einerseits gibt es Funktionen

$\phi_i^{k,p}\left(\cdot;(\tau_l)_l\right)$, welche einen Beitrag zu dem alten Intervall $I_{prev}$ geleistet haben, welche aber keinen weiteren Beitrag zu Zeitpunkten in dem Folgeintervall $I_{adv}$ leisten, d.h. jedes Innere ihrer Träger habt eine nicht-leere Schnittmenge mit $I_{prev}$, aber eine leere Schnittmenge mit $I_{adv}$. Aus diesem Grund sind sie obsolet. Andererseits gibt es Funktionen

$\phi_i^{k,p}\left(\cdot;(\tau_l)_l\right)$, welche erstmalig einen Beitrag leisten. Dies bedeutet jedes Innere ihrer Träger hat eine nicht-leere Schnittmenge mit $I_{adv}$, aber eine leere Schnittmenge mit $I_{pre}$. Zumindest die Koeffizienten dieser Funktionen müssen bestimmt werden. Mit der Ausnahme des Konstanthaltens aller oder auch nur fast aller Koeffizienten, welche im vorangegangenen Schritt ermittelt wurden, wird dies analog zur anfänglichen Approximation durchgeführt. Dabei werden wiederum ausschließlich Informationen der Funktion f für Zeitpunkte innerhalb des aktuellen Intervalls $I_{adv}$ verwendet.

Im Wesentlichen bilden alle bereits ermittelten Koeffizienten, welche hier mit $b_{i_{ess}}^{k,p}$ bezeichnet werden, zusammen mit den zugehörigen Funktionen $\phi_i^{k,p}\left(\cdot;(\tau_l)_l\right)$ die bekannten Anteile der Approximation der auf das Intervall $I_{adv}$ beschränkten gegebenen Funktion f. Dann müssen die unbekannten Teile der Approximation der gegebenen Funktion f bestimmt werden durch die Approximation der resultierenden, bekannten Funktion $f - \sum_{i_{ess}} b_{i_{ess}}^{k,p} \phi_{i_{ess}}^{k,p}\left(\cdot;(\tau_l)_l\right)$, wobei wiederum eine Beschränkung auf das Intervall $I_{adv}$ erfolgt.

Hierbei können verschiedene fortschreitende Funktionensysteme verwendet werden, um die Approximation eines Satellitenorbits und einer Satellitenuhrenkorrektur unabhängig voneinander durchzuführen. Grundsätzlich können für unterschiedliche Satelliten ebenfalls unterschiedliche Systeme verwendet werden.

Nachfolgend erfolgt eine Betrachtung hinsichtlich der Verteilung der Koeffizienten des fortschreitenden Funktionensystems und der Auswirkungen auf die Zeit bis eine erste Peilung möglich ist, die sog. Akquisitionszeit oder im Englischen time to first fix. Hierzu wird zunächst das konventionelle Vorgehen der Aktualisierung der Information bezüglich Ephemeriden und der Uhrenkorrektur nochmals erläutert. Die vollständigen üblichen Approximationen sind in einen einzigen Informationsblock, einen sog. Frame, welcher kontinuierlich wiederholt wird, gepackt. Dies ist ebenfalls möglich für sämtliche Koeffizienten eines fortschreitenden Funktionsystems, welche für eine vorgegebene Zeitspanne notwendig sind. Wenn die Anzahl der Bits, welche für die Übertragung der Koeffizienten notwendig sind, nicht größer als bei dem konventionellen Vorgehen sind, wird mit dem erfindungsgemäßen Verfahren die gleiche time to first fix erzielt, wie bei einem herkömmlichen Verfahren. Wie bereits erläutert wurde, benötigt der Aktualisierungsprozess für ein fortschreitendes Funktionsystem die Bereitstellung sämtlicher notwendiger Koeffizienten nicht auf einmal. Sobald eine ausreichende Zahl von vormals übertragenen Koeffizienten gespeichert ist, ist es ausreichend, die Koeffizienten gleichförmig verteilt über die Zeit zu empfangen, so dass der neue Koeffizient rechtzeitig verfügbar ist. Dies stellt ein sehr effizientes Verbreitungsschema dar, solange keine besondere Anforderung an die time to first fix besteht.

Es existieren zwei Wege, dieses Problem zu lösen, wenn fortschreitende Funktionsysteme verwendet werden:

1. Wenn die Koeffizienten gleichförmig verteilt über die Zeit zur Verfügung gestellt werden, besteht der einfachste Weg zur Verkürzung der time to first fix darin, eine zusätzliche geeignete Infrastruktur bereitzustellen, um einerseits eine unverzügliche Verbreitung der gegenwärtig notwendigen Koeffizienten zu initiieren und andererseits diese zu übertragen. Dieses Vorgehen erfordert eine Zwei-Wege-Kommunikation. Dieses Verfahren ist ebenfalls für den herkömmlichen Ansatz der Parametrisierung einer Navigationsnachricht verwendbar.

2. Die time to first fix ist durch zwei Werte getrieben: die Wiederholungsrate bei der Verbreitung aller notwendigen Koeffizienten zusammen mit Referenz-Zeitinformationen eines einzelnen Satelliten und die Zeitperiode, welche zur Übertragung der Koeffizienten benötigt wird. Die grundsätzliche Idee zur Verringerung dieser beiden Zeiten besteht darin, zwei Funktionensysteme gleichzeitig zu verwenden, welche die Möglichkeit der Konversion untereinander aufweisen.

Das erste Funktionensystem sollte vorteilhafterweise dabei eine hohe Approximationsgüte zusammen mit einer großen wesentlichen Breite $\alpha$ der Knoten aufweisen, womit eine nicht sehr kleine Anzahl notwendiger Koeffizienten impliziert ist. Dies bedeutet einerseits eine große time to first fix und andererseits eine sehr kleine Aktualisierungsrate für die notwendigen Koeffizienten. Dieses erste Funktionensystem wird als "Macro Advancing Function System" bezeichnet. Das zweite Funktionensystem sollte vorteilhafterweise eine sehr kleine Anzahl an notwendigen Koeffizienten mit einer moderaten Approximationsgüte kombinieren. Diese Anforderung ist erreichbar, wenn die Koeffizienten sehr häufig aktualisiert werden. Das zweite Funktionensystem wird als "Micro Advancing Function System" bezeichnet. Das zweite Funktionensystem führt zu einer sehr kurzen time to first fix, wie später ersichtlich werden wird.

Die postulierte Möglichkeit der Konversion sollte vorteilhafterweise die Fähigkeit zur alsbaldigen Erzeugung einer besseren Repräsentation innerhalb des ersten Funktionensystems (Macro Advancing Function System) durch Datenkumulation aus dem zweiten Funktionensystem (Micro Advancing Function System) implizieren. Nach und nach werden die aufgrund der fortschreitenden Zeit aktualisierten Koeffizienten des ersten Funktionensystems die Approximation bestimmen, wobei ein glatter Übergang von der zweiten (Micro) zu dem ersten Funktionensystem (Macro Advancing Function System) stattfindet.

Nachfolgend wird das eben beschriebene, theoretische Vorgehen anhand eines konkreten Ausführungsbeispiels erläutert. Dies erfolgt anhand sog. normalisierter polynomialer B-Splines mit einfachen Knoten. Insbesondere wird die Konversion des zweiten (Micro) in das erste (Macro Advancing Function System) Funktionensystem dargestellt. Darüber hinaus wird die Erfindung an numerischen Beispielen unter Verwendung polynomialer B-Splines über einem äquidistanten Gitter für die Approximation von realen Satellitenorbits und Satellitenuhrenkorrekturen gezeigt.

Definition 2:

Zunächst erfolgt eine Definition von normalisierten polynomialen B-Splines mit einfachen Knoten. Gegeben ist eine natürliche Zahl k, eine positive Zahl $\beta$ und eine unendliche Folge von Knoten $(\tau_l)_{l \in N}$, welche paarweise unterschiedlich sind und wobei für alle $l \in N$ gilt: $\tau_{l+1} - \tau_l > \beta$. Die Zahl k wird Ordnung der B-Splines genannt und $\beta$ ist der minimale Abstand der Knoten.

Sei $\left( N_i^k \left( \cdot; (\tau_l)_{l \in N} \right) \right)_{i \in N}$ eine Sequenz von Funktionen mit den folgenden Eigenschaften:

1. Für jedes $i \in N$ ist $N_i^k \left( \cdot; (\tau_l)_{l \in N} \right)$ stückweise ein Polynom des Grades k-1,

2. Für jedes $i \in N$ ist $N_i^k \left( \cdot; (\tau_l)_{l \in N} \right)$ (k-2)-fach stetig differenzierbar,

3. Für jedes $i \in N$ ist $N_i^k\left(\cdot;(\tau_l)_{l \in N}\right)$ nicht negativ,

4. Für jedes $i \in N$ verschwindet $N_i^k\left(\cdot;(\tau_l)_{l \in N}\right)$ für alle Punkte, die nicht in dem Intervall $[\tau_i, \tau_{i+k}]$ liegen. Dies bedeutet, $N_i^k\left(\cdot;(\tau_l)_{l \in N}\right)$ hat einen lokalen Träger,

5. $\left(N_i^k\left(\cdot;(\tau_l)_{l \in N}\right)\right)_{i \in N}$ bildet eine Teilung der Eins, d.h. $\sum_{l \in N} N_i^k\left(\cdot;(\tau_l)_{l \in N}\right) = 1$.

Ein solches Funktionensystem wird ein System von normalisierten polynomialen B-Splines mit einfachen Knoten genannt. Die Existenz eines solchen Funktionensystems ist wohlbekannt. Die Eigenschaften definieren das Funktionensystem sogar eindeutig. Offensichtlich bildet ein System normalisierter polynomialer B-Splines ein fortschreitendes Funktionensystem im Sinne der Erfindung.

Eine wohlbekannte Rekursion lautet für n > 1:

$$N_i^n(\cdot) = \frac{\tau_{i+n} - \cdot}{\tau_{i+n} - \tau_{i+1}} N_{i+1}^{n-1}(\cdot) + \frac{\cdot - \tau_i}{\tau_{i+n-1} - \tau_i} N_i^{n-1}(\cdot),$$

worin $N_i^1(\cdot)$ den Wert 1 für Punkte in dem Intervall $[\tau_i, \tau_{i+1})$ und 0 an allen anderen Stellen annimmt. Mit dieser Rekursionsformel ist leicht zu sehen, dass für jedes $i \in N$ die Funktion $N_i^k\left(\cdot;(\tau_l)_{l \in N}\right)$ in dem Intervall $[\tau_i, \tau_{i+1})$ tatsächlich positiv ist.

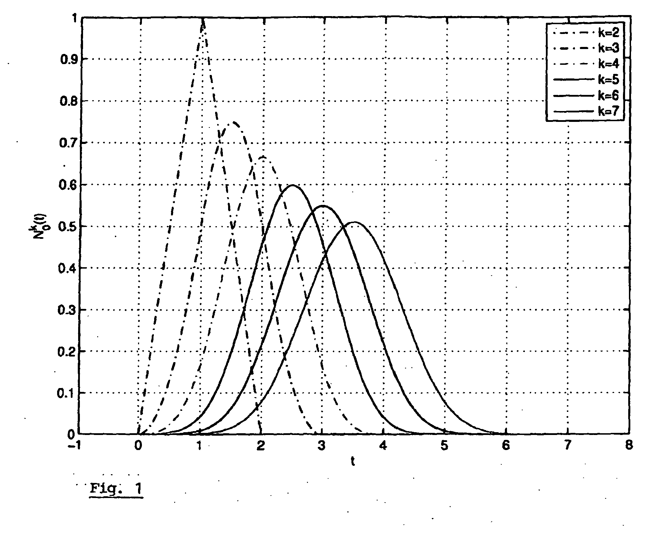

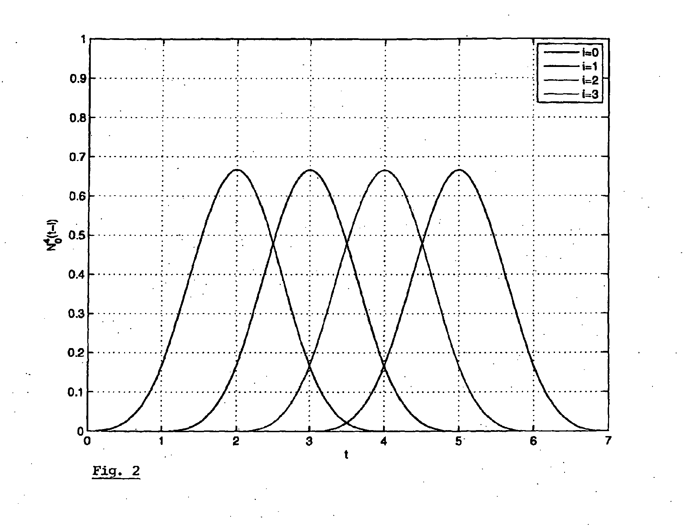

Fig. 1 zeigt normalisierte polynomiale B-Splines der Ordnungen k von 2 bis 7 über einem äquidistanten Gitternetz mit Knotenweite 1 und ganzzahligen Knoten, auch bekannt als sog. Kardinal-B-Splines. Fig. 2 zeigt all jene Kardinal-B-Splines der Ordnung 4, welche zu dem Intervall (3, 4) beitragen.

Vor der Beschreibung der Konversion des zweiten Funktionensystems zu dem ersten Funktionensystem, im Falle normalisierter polynomialer B-Splines mit einfachen Knoten, werden die Hauptcharakteristika, welche für die Konversion verwendet werden, dargestellt. Hierzu wird von einem Intervall der Form $(\tau_j, \tau_{j+q})$ für eine natürliche Zahl q, welche nicht 0 ist, ausgegangen. Durch die 4. Eigenschaft der oben gegebenen Definition 2 folgt unmittelbar, dass exakt die Träger der k+q-1 B-Splines $N_{j-k+1}^k, \ldots, N_{j+q-1}^k$ eine nicht-leere Schnittmenge mit diesem Intervall aufweisen. Außerdem haben solche B-Splines die Eigenschaft, dass sie eindeutig über das Intervall $(\tau_j, \tau_{j+q})$ durch k+q-1 Interpolationspunkte $x_{j-k+1}, \ldots, x_{j+q-1}$ bestimmt werden können, wenn jeder Punkt $x_i$ in dem Intervall $(\tau_i, \tau_{i+k})$ enthalten ist. Dies ist es, was für den Vorgang der Konversion benötigt wird. Zur Vereinfachung der Schreibweise wird eine endliche Folge $a_{i_1}, \ldots, a_{i_2}$ dargestellt als $(a_i)_{i=i_1}^{i_2}$.

Konversion von dem zweiten Funktionensystem zu dem ersten Funktionensystem, d.h. von dem Mikro-Funktionensystem zu dem Makro-Funktionensystem

Es sind zwei natürliche Zahlen m, n mit $0 < m << n$ und zwei Folgen von Knoten, $(t_l)_{l \in N}$ und $(\tau_l)_{l \in N}$, derart gegeben, dass die Abstände aufeinander folgender Knoten der ersten Folge sehr viel kleiner als die der zweiten Folge sind. Die zugehörigen Funktionensysteme normalisierter polynomialer B-Splines mit einfachen Knoten, $\left(N_j^m\left(\cdot;(t_l)_{l \in N}\right)\right)_{j \in N}$ und $\left(N_i^n\left(\cdot;(\tau_l)_{l \in N}\right)\right)_{i \in N}$, bilden ein zweites (Micro Advancing Function System) und ein erstes (Macro Advancing Function System) Funktionensystem. Die Koeffizienten des zweiten Funktionensystems müssen derart bestimmt werden, dass das resultierende System das erste Funktionensystem in den Knoten $(t_l)_l$ interpoliert, welche gegenwärtig berücksichtigt werden. Die Koeffizienten beider Systeme, d.h. $\left(b_j^m\right)_{j \in N}$ und $\left(b_i^n\right)_{i \in N}$ werden gleichförmig über die Zeit verteilt übertragen, so dass neue Koeffizienten beider Funktionensysteme jeweils rechtzeitig verfügbar sind. Dies bedeutet, die Koeffizienten $b_{j_0}^m$ und $b_{i_0}^n$ müssen spätestens zum Zeitpunkt $t_{j_0}$ und $\tau_{i_0}$ gesendet werden. Der Einfachheit halber - aber ohne die Allgemeinheit einzuschränken - wird davon ausgegangen, dass der Koeffizient $b_{i_0}^n$ genau zum Zeitpunkt $\tau_{i_0}$ gesendet wird. Das zweite Funktionensystem (Micro Advancing Function System) kann eine sehr kurze time to first fix aufweisen, abhängig vom Knotenabstand und der Ordnung m. Für die Sequenzen $(t_j)_{j \in N}$ und $(\tau_i)_{i \in N}$ stellen $j_0$ und $i_0$ die Indizes des jeweils größten Knoten dar, welcher kleiner oder gleich einer zu betrachtenden Zeit $T_0$ ist. Dies bedeutet

$$T_0 \in \left[ t_{j_0}, t_{j_0+1} \right) \text{ und } T_0 \in \left[ \tau_{i_0}, \tau_{i_0+1} \right).$$

Eingang (input):

Endliche Folgen von Koeffizienten $\left( b_{j_0+j}^m \right)_{j=-k_m+1}^0$ und $\left( b_{i_0+i}^n \right)_{i=-k_n+1}^0$ worin $k_m$ und $k_n$, $k_n \le n$, natürliche Zahlen einschließlich 0 darstellen.

Ausgabe (output):

1. Ein Flag, das die Verwendbarkeit anzeigt.

2. Eine endliche Folge von Koeffizienten $\left( \widetilde{b}_{i_0+i}^{\min(k_m-m+2,n)} \right)_{i=-\min(k_m-m+2,n)+1}^0$, die zur Knotenfolge

$\left( \tau_i \right)_{i=-\min(k_m-m+2,n)+1}^0$ gehören.

Startphase (start-up phase):

Im Falle von $0 \le k_m < m$ (was impliziert, dass $k_n$ 0 oder 1 ist), wird das Flag derart gesetzt, dass dieses eine Nichtverwendbarkeit anzeigt, weil nicht genug Information verfügbar ist.

Übergangsphase (transitional phase), Fall 1:

Es gilt: $m \le k_m \le n+m$-2 und $k_n = 0$. Das Flag wird derart gesetzt, dass dieses Verwendbarkeit anzeigt. Die $k_m$-$m$+2 Knoten $\left( t_{j_0+j} \right)_{j=-k_m+m}$ sind alle in dem Intervall $(\tau_{i_0}, \tau_{i_0+1})$ enthalten. Aufgrund der geforderten Interpolationseigenschaft und der 4. Eigenschaft der Definition 2 sind die exakten Werte des ersten Funktionensystems an diesen Knoten bekannt. An den vorherigen m-1 Knoten $\left( t_{j_0+j} \right)_{j=-k_m+1}^{-k_m+m-1}$ ist diese Information nicht bekannt. Aus diesem Grund ist die Interpolation der $k_m$ -$m$+2 exakten Werte in den zugehörigen Knoten durch das Funktionensystem $\left( N_{i_0+i}^{k_m-m+2}(\cdot;(\tau_l)_{l\in N}) \right)_{i=-k_m+m-1}^0$ möglich und führt zu Koeffizienten $\left( \widetilde{b}_{i_0+i}^{k_m-m+2} \right)_{i=-k_m+m-1}^0$. Diese repräsentieren ein Polynom des Grades $k_m$-$m$+1 über dem Intervall $[\tau_{i_0}, \tau_{i_0+1}]$ Aufgrund der Eindeutigkeit der B-Spline-Repräsentation bei gleichen Knotenfolgen sind die Koeffizienten $\left( \widetilde{b}_{i_0+i}^n \right)_{i=-n+1}^0$ identisch mit $\left( b_{i_0+i}^n \right)_{i=-n+1}^0$. Dies bedeutet, sobald $k_m$=n+m-2 Koeffizienten des zweiten Funktionensystems verfügbar sind, sind die notwendigen Koeffizienten des ersten Funktionensystems ebenfalls bekannt.

Übergangsphase (transitional phase), Fall 2:

Es gilt: $m \leq k_m \leq n+m\text{-}2$ und $k_n > 0$. Dies bedeutet, es ist zumindest ein Koeffizient $b_i^n$ verfügbar. Das Flag wird derart gesetzt, dass dieses Verwendbarkeit anzeigt. Es gibt zwei Möglichkeiten, diesen zweiten Fall zu handhaben:

Strategie A: Sobald der erste Koeffizient des ersten Funktionensystems verfügbar ist, aber zur gleichen Zeit weniger als $k_m = n+m\text{-}2$ Koeffizienten des zweiten Funktionensystems verfügbar sind, werden alle Koeffizienten welche bereits empfangen wurden verworfen, und man beginnt von vorne. Diese Vorgehensweise könnte zur Folge haben, dass die time to first fix sich verdoppelt.

Strategie B: In dieser wird das Intervall $(\tau_{i0}, \tau_{i0+1})$ betrachtet, welches sicherlich alle bereits empfangenen Knoten umfasst. Die n+1 Koeffizienten $\left(\widetilde{b}_{i_0+i}^{\,n}\right)_{i=-n}^{0}$ aller B-Spline-Funktionen $N_p^n\big(\cdot;(\tau_l)_{l\in N}\big)$, welche zu diesem Intervall beitragen, können bestimmt werden durch die Lösung des folgenden linearen Gleichungssystems:

$$\widetilde{b}_{i_0}^{\,n} \overset{!}{=} b_{i_0}^{\,n} \; und\, f\ddot{u}r\, alle \; p = j_0 - k_m + m, ..., j_0 + 1 \; gilt:$$

$$\sum_{i=-n}^{-1} \widetilde{b}_{i_0+i}^{\,n} N_{i_0+i}^{\,n}\big(t_p;(\tau_l)_{l\in N}\big) \overset{!}{=} \sum_{j=-k_m+1}^{0} b_{j_0+j}^{\,m} N_{j_0+j}^{\,m}\big(t_p;(t_l)_{l\in N}\big) - \widetilde{b}_{i_0}^{\,n} N_{i_0}^{\,n}\big(t_p;(\tau_l)_{l\in N}\big)$$

Das resultierende System hat n unbekannte Variablen und $k_m\text{-}m+2$ Gleichungen. In den meisten Fällen von $k_m$ ist dieses System unterbestimmt. Daher muss es derart gelöst werden, dass eine geeignete Norm $\|\cdot\|$ minimiert wird, d.h. die berechnete Lösung minimiert den Ausdruck $\left\|\left(\widetilde{b}_{i_0+i}^{\,n}\right)_{i=-n}^{-1}\right\|$ unter allen möglichen Lösungen $\left(\widetilde{b}_{i_0+i}^{\,n}\right)_{i=-n}^{-1}$. Im Falle von $k_m\text{-}m+2=n$ stellt die Eindeutigkeit der B-Spline-Darstellung auf gleichen Knotenfolgen sicher, dass die Koeffizienten $\left(\widetilde{b}_{i_0+i}^{\,n}\right)_{i=-n}^{0}$ identisch sind zu $\left(b_{i_0+i}^{\,n}\right)_{i=-n}^{0}$. Dies bedeutet, sobald $k_m = n+m\text{-}2$ Koeffizienten des zweiten Funktionensystems verfügbar sind, sind die notwendigen Koeffizienten des ersten Funktionensystems ebenfalls bekannt. Die interessierende Zeit $T_0$ ist in dem Intervall $[\tau_{i0}, \tau_{i0+1})$ enthalten. Folglich trägt der B-Spline $N_{i_0-n}^{\,n}\big(\cdot;(\tau_l)_{l\in N}\big)$ in $T_0$ nicht bei. Dies heißt, lediglich die Folge von Koeffizienten $\left(\widetilde{b}_{i_0+i}^{\,n}\right)_{i=-n+1}^{0}$ ist notwendig und wird für die Ausgabe bereitgestellt.

Normale Arbeitsphase (normal working phase):

Im Falle von $n+m\text{-}2<k_m$ wird das Flag derart gesetzt, dass Verwendbarkeit angezeigt wird und die Folge der Koeffizienten $\left(\widetilde{b}_{i_0+i}^{\,\min(k_m-m+1,n)}\right)_{i=-\min(k_m-m+1,n)+1}^{0}$, welche als Ausgabe bereitgestellt wird, ist gleich dem zugehörigen Input $\left(b_{i_0+i}^{\,n}\right)_{i=-n+1}^{0}$. Denn am Ende der Übergangsphase ($n+m\text{-}2=k_m$) sind alle Koeffizienten des ersten Funktionensystems verfügbar, d.h. $k_n = n$.

Das erste Funktionensystem führt bei Verwendung dieses Outputs zu der erwünschten Approximation durch folgende Berechnung:

$$\sum_{i=-\min(k_m-m+1,n)+1}^{0} \widetilde{b}_{i_0+i}^{\,\min(k_m-m+1,n)} N_{i_0+i}^{\,\min(k_m-m+1,n)}\big(T_0;(\tau_l)_{l\in N}\big)$$

Im Fall, dass die Zahl $k_m$ der erhaltenen Koeffizienten $b_q^m$ größer ist als m aber kleiner als 2m-1 (d.h. $k_m$-m+1<m), ist es besser, direkt die Eingabe des zweiten Funktionensystems zu verwenden, d.h.

$$\sum_{i=-m+1}^{0} b_{j_0+j}^m N_{j_0+j}^m \left( T_0 ; \left( \tau_l \right)_{l \in N} \right).$$

Theoretisch können die Koeffizienten des ersten Funktionensystems jedesmal bestimmt werden, sobald erstmals genügend Informationen über das zweite Funktionensystem empfangen wurden. Aus numerischen Gründen kann es notwendig sein, diesen Prozess in Teilen weiterhin zu wiederholen. Dies ist nur für eine Zeitperiode notwendig, welche nicht länger als ein geeigneter Bruchteil der Dauer des tatsächlichen Zeitintervalls $[\tau_{i0},\tau_{i0+1}]$ ist.

Aufgrund der Interpolationseigenschaft erzeugt der oben beschriebene Prozess auch in der Übergangsphase eine glatte Approximation. In der normalen Arbeitsphase ist die Approximation (n-2)-fach stetig differenzierbar.

Nachfolgend werden einige numerische Beispiele beschrieben, wobei normalisierte polynomiale B-Splines über einem äquidistanten Gitternetz verwendet werden. Nun ist $\nu$ eine positive, reelle Zahl und k eine natürliche Zahl. Die definierenden Knoten werden gemäß $\tau_l := l/\nu$ für alle $l \in N$ erklärt. Die resultierenden B-Splines,

$N_j^k \left( \cdot ; \left( \tau_l \right)_{l \in N} \right),$ können ausgedrückt werden durch den bereits erwähnten Kardinal-B-Spline gleicher Ordnung,

$Q^k(\cdot),$ da für alle $t \in R$: $N_j^k \left( t ; \left( \tau_l \right)_{l \in N} \right) = Q^k \left( \nu t - j \right)$ gilt.

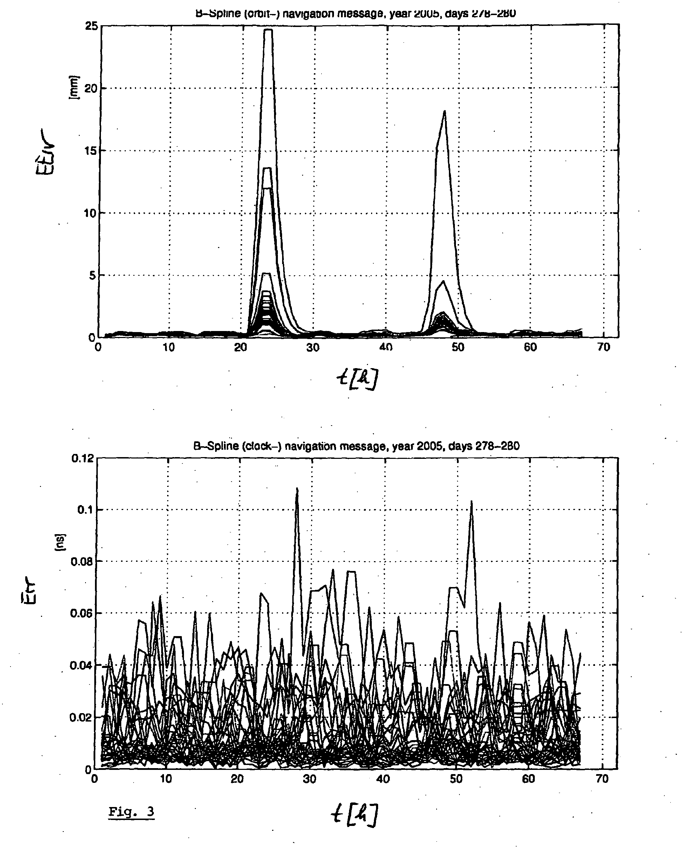

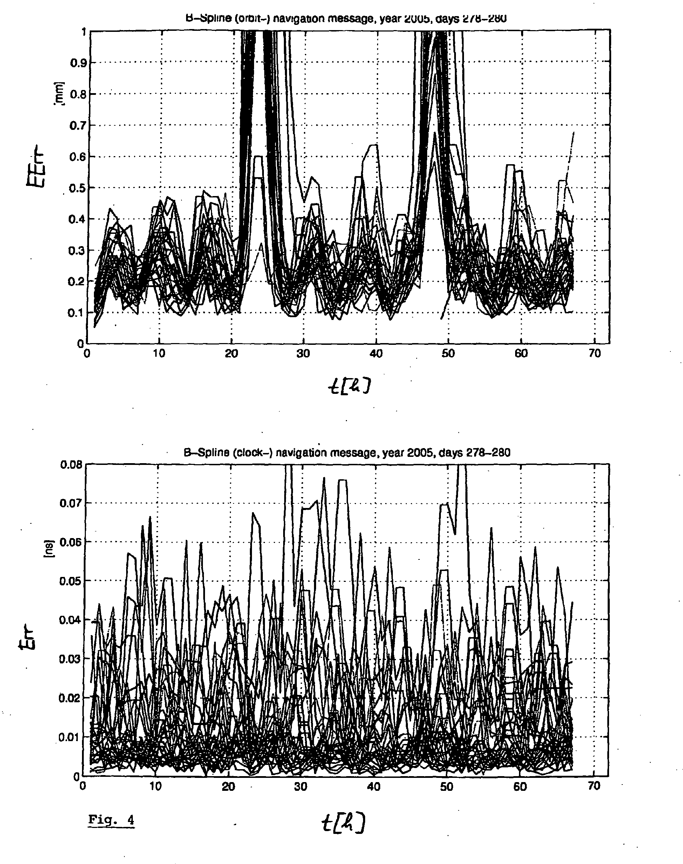

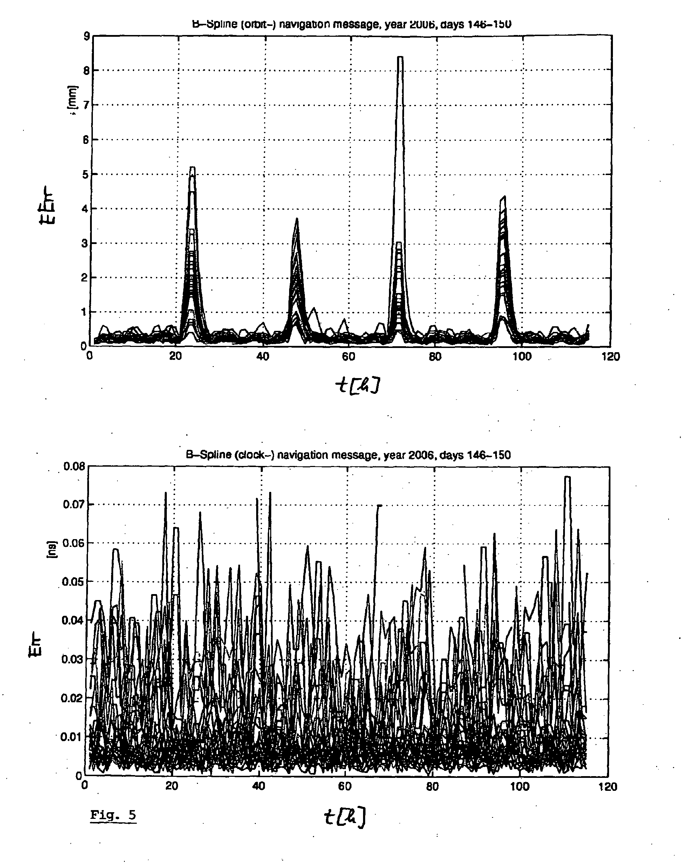

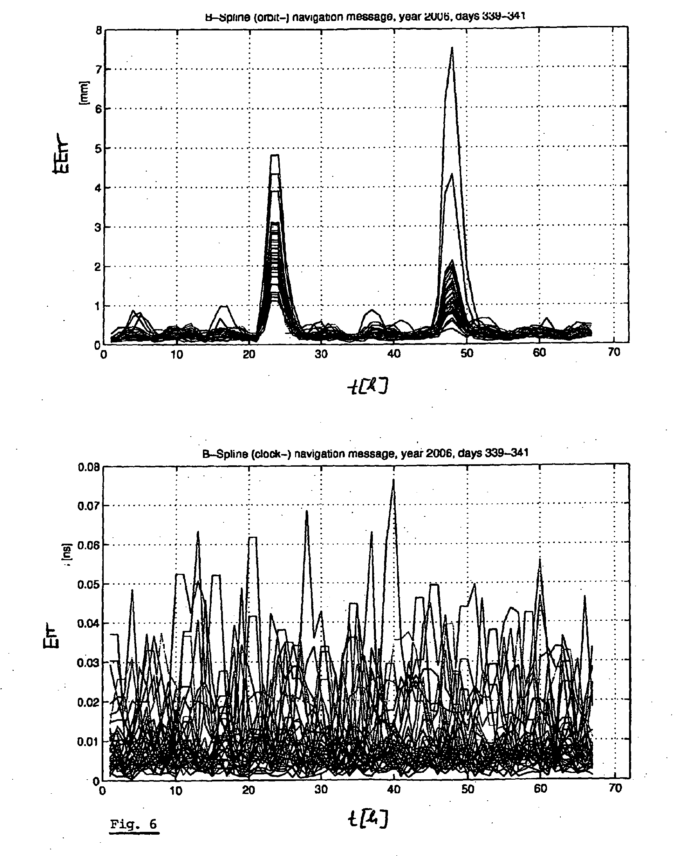

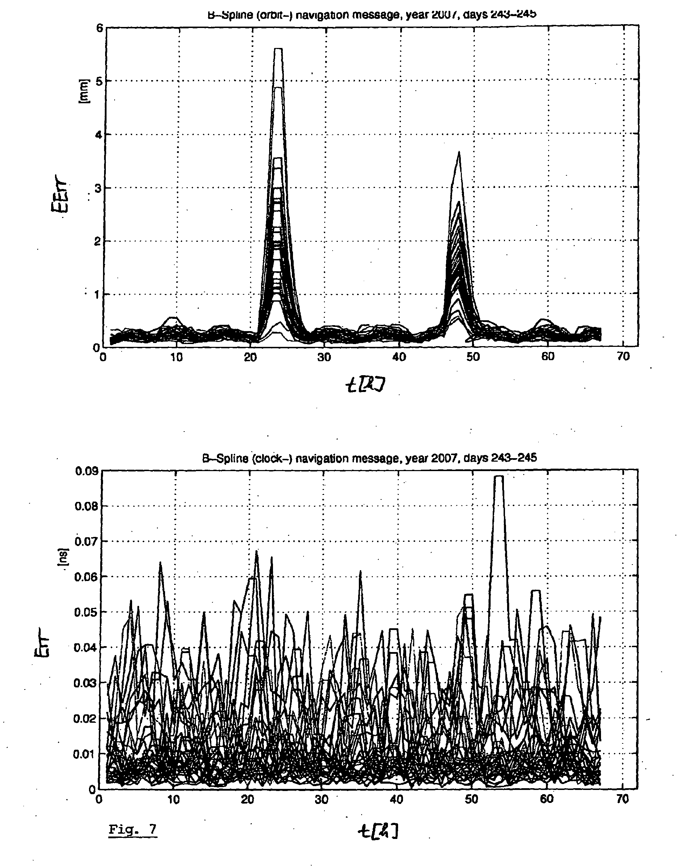

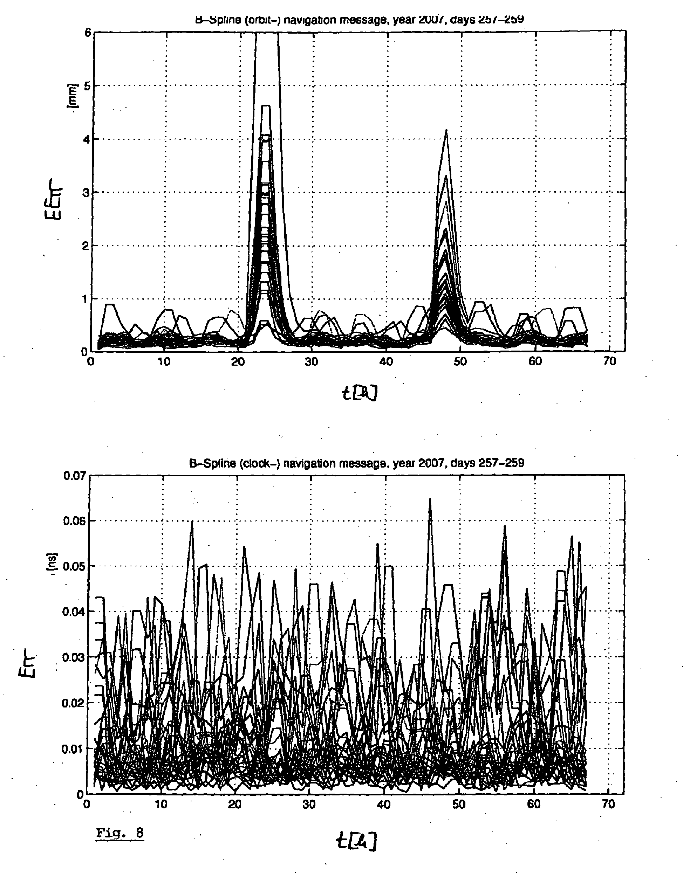

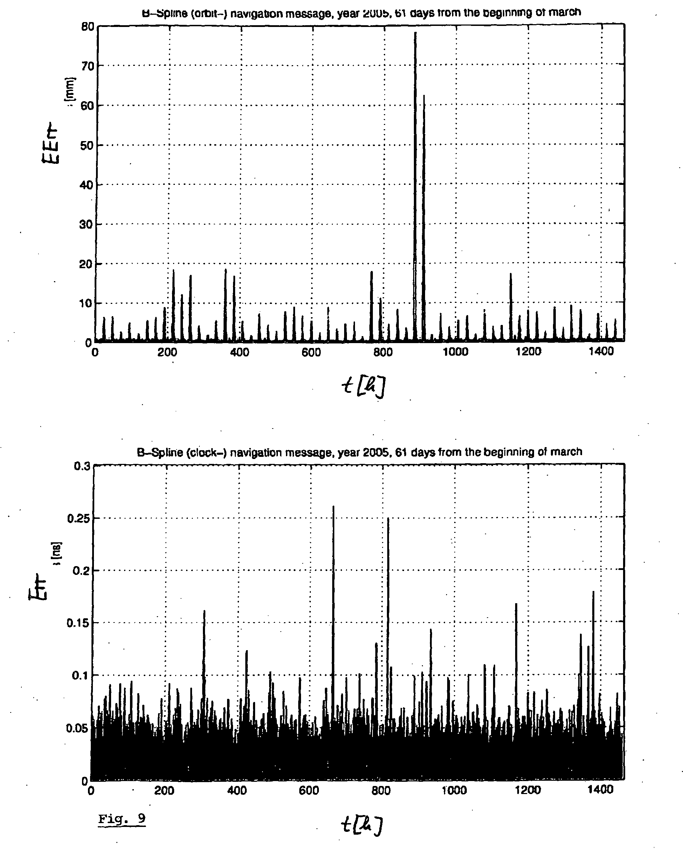

Für die in den Fig. 3 bis 9 dargestellten Tests wurden die jeweils verfügbaren GPS-Satelliten an verschiedenen aufeinander folgenden Tagen verwendet, wobei deren Satellitenorbits und Satellitenuhrenkorrekturdaten durch hochgenaue Postprozessierung präzise bis auf Größenordnungen von Zentimetern bzw. 0,1 ns gegeben sind. Für die Resultate, welche in den Figuren 3 bis 9 dargestellt sind, wurden B-Splines, welche durch zwei Sätze von Parametern gegeben sind, angewendet, wobei der eine Satz für die Approximation der Satellitenorbits (k=8 und $\frac{1}{\nu} = 869\frac{1}{3}$) und der andere Satz für die Satellitenuhrenkorrektur ($k = 4$ und $\frac{1}{\nu} = 579\frac{5}{9}$) gilt. Weil $\frac{1}{\nu}$ auch den zeitlichen Abstand zwischen aufeinander folgenden Knoten darstellt, gibt es eine Zeitdistanz in Minuten von 14:29,33 und 9:39,56 für die jeweils zum Satellitenorbit bzw. zur Satellitenuhr gehörenden Knoten. Die zeitliche Länge der Träger der entsprechenden B-Splines ist durch $\frac{k}{\nu}$ gegeben, d.h. durch ungefähr 116 bzw. 39 Minuten. Der Annäherungsprozess ist wie vorstehend beschrieben vorgenommen, wobei als wesentliche Zeitintervalle $I_{ess}$ eine Folge von Intervallen $(t_0+3600 \cdot [l,l+1))_{l \in N}$ verwendet ist, wobei $t_0$ einen beliebigen fixen Zeitpunkt in Sekunden darstellt. Für die zugehörigen fortschreitenden Zeitintervalle $I_{adv}$ wird das Zeitintervall $I_{ess}$ um zwei weitere Stunden verlängert, d.h. $(t_0+3600 \cdot [l,l+3))_{l \in N}$, wobei $t_0$ wie zuvor definiert ist. In jeder der Figuren 3 bis 9 ist für jeden Zeitpunkt der euklidische Approximationsfehler EErr in Millimetern und Err in Nanosekunden dargestellt. Unterschiedliche Linien repräsentieren hierbei unterschiedliche Satelliten. Am Tageswechsel treten größere Sprünge auf. Diese resultieren aus Sprüngen in den zu Grunde liegenden Daten. Zwischen den Punkten, welche Mitternacht repräsentieren, ist der Approximationsfehler um etwa eine Größenordnung besser.

Im folgenden Abschnitt werden weitere Informationen gegeben, auf welche Weise die fortschreitenden Funktionensysteme in die Gesamtprozedur von Boden- und Raumsegmenten zu integrieren sind, um daraus größtmöglichen Nutzen zu ziehen.

Ein Großteil der vorzunehmenden Berechnungen kann durch einen Bordrechner des Satelliten vorgenommen werden. Wenn das erste Funktionensystem bekannt ist, kann das zweite Funktionensystem errechnet werden, z.B. durch einen Interpolationsprozess, wie in dem speziellen Fall von B-Splines oben gezeigt wurde. Aus diesem Grund besteht keine Notwendigkeit, das zweite Funktionensystem zu dem Satelliten zu übertragen.

Eine Übertragungslast aufgrund eines Uplinks von Orbit- und Uhrkorrekturdaten kann gleichförmig über die Zeit verteilt werden, so dass neue Koeffizienten des ersten Funktionensystems zumindest dann verfügbar sind, wenn diese benötigt werden. Neben den Koeffizienten selbst (drei für den Satellitenorbit und einen für die Satellitenuhrkorrektur) ist lediglich ein Attribut notwendig, um jedem von ihnen den zugehörigen Knoten zuzuweisen. Aus diesem Grund können Mittel- als auch Spitzenwerte dieser Uplink-Lasten gering gehalten werden und die Dauer eines Uplinks für Orbit- und Uhrkorrekturdaten im Vergleich zu Verfahren, welche die komplette Information auf einmal senden, verringert werden.

Ebenso kann die Verbreitung der fortschreitenden Funktionensysteme von dem Raum-Segment zu dem Benutzer-Segment gleichförmig verteilt über die Zeit realisiert werden. Hierzu wird das Folgende benötigt:

- Ein vektorieller Koeffizient für den Orbit und ein skalarer Koeffizient für die Uhrenkorrektur, für jeden Zeit-Knoten $\left(\tau_l^{orb}\right)_{l \in N}$ bzw. $\left(\tau_l^{clk}\right)_{l \in N}$ . Beide Koeffizienten gehören zu ersten Funktionensystemen und müssen spätestens zu den zugehörigen Zeit-Knoten bereitgestellt werden. Diese Knoten müssen entweder ebenfalls verbreitet werden oder sie müssen im Voraus im Benutzerendgerät bekannt sein. Letzteres ist möglich, z.B. für äquidistante Gitternetze, bei denen die Knoten a priori durch $\tau_l := \tau_0 + l/v$ für beliebige aber feste Zahlen $\tau_0$ und $v$, $v > 0$, und alle $l \in N$ gegeben sind. Wenn verschiedene Koeffizienten des gleichen ersten Funktionensystems auf einmal übertragen werden, dann müssen Informationen für die Zuweisung zu den korrekten Knoten mit inkludiert sein. Wenn die Koeffizienten nur für vorgegebene Zeitspannen, welche dem Benutzerendgerät bekannt und untereinander disjunkt sind, übertragen werden, dann ist es nicht nötig weitere Zuordnungsinformationen zu verbreiten, z.B. für äquidistante Gitternetze wird jedes $b_l$ innerhalb des Zeitintervalls $(\tau_{l-1}, \tau_l - \Delta]$ verbreitet, worin $\Delta$ eine nicht-negative Zahl kleiner als jedes $\tau_l - \tau_{l-1}$ ist.

- Ein vektorieller Koeffizient für den Orbit und ein skalarer Koeffizient für die Uhrenkorrektur, für jeden Zeit-Knoten $\left(t_l^{orb}\right)_{l \in N}$ bzw. $\left(t_l^{clk}\right)_{l \in N}$ . Beide Koeffizienten gehören zu zweiten Funktionensystemen und müssen spätestens zu den zugehörigen Zeit-Knoten bereitgestellt werden. Diese Knoten und alle anderen Parameter, welche relevant für die Benutzung des zweiten Funktionensystems sind, müssen im Vorhinein dem Benutzerendgerät bekannt sein, um die Verbreitungslast gering zu halten.

- Zwei Sätze von Parametern, welche relevant sind für die Benutzung der beiden ersten Funktionensysteme, wenn die Knoten gegeben sind. Im Falle eines Systems normalisierter polynomialer B-Splines mit einfachen Knoten ist der einzige relevante Parameter neben den Knoten die Ordnung. Die Konversion eines zweiten zu einem ersten Funktionensystem erfordert den Empfang dieser Parametersätze zumindest, bis das erste Funktionensystem zum ersten Mal zur Verwendung kommt. Um ein Ansteigen der time to first fix zu vermeiden, müssen diese entsprechend verbreitet werden. Im Falle einer Konversion zwischen einem normalisierten polynomialen B-Spline mit einfachen Knoten muss die Ordnung $n$ zumindest jede $(n+m-2)$-*te* Zeit $t_l$ übertragen werden. Wenn die Ordnung nicht zu jedem Zeitpunkt $t_l$ übertragen wird, kann Strategie B gelegentlich nicht realisiert werden. Der Grund liegt darin, dass die Ordnung $n$ unmittelbar benötigt wird, wenn Strategie B angewandt werden soll. Die Konsequenz hierin liegt in diesem gelegentlichen Fall in einem Wechsel zur Strategie A.

Angenommen, jeder Koeffizient eines fortschreitenden Funktionensystems, definiert durch Zahlen $p$, $k$ und $\alpha$ und die Knoten $(\tau_l)_{l \in N}$, wird $\Delta_k$ Sekunden vor dem zugeordneten Knoten verbreitet. Mit $\varepsilon$ ist die Zeit zwischen aufeinander folgenden Messepochen bezeichnet. Für den betrachteten Satelliten soll der erste Empfang eines Signals innerhalb des Intervalls $(\tau_{j_0} - \Delta_k, \tau_{j_0+1} - \Delta_k]$ gelegen sein. Dann ist die time to first fix begrenzt durch $\tau_{j_0+k} - \tau_{j_0} + \Delta_k + \varepsilon$ Sekunden, sofern die für die absolute Referenzierung notwendigen Zeitinformationen, in entsprechender Weise übertragen werden, d.h. periodisch innerhalb der gleichen Zeit. Dies gilt, weil im schlechtesten Fall der erste Koeffizient frühestens zur Zeit $\tau_{j_0+1} - \Delta_k$ empfangen werden kann und dann das Sammeln der nächsten $k$ folgenden Koeffizienten, welche im allgemeinen notwendig sind, ein Warten bis zum Zeitpunkt $\tau_{j_0+k} - \Delta_k$ impliziert. Jedoch ist der letzte empfangene Koeffizient nicht nutzbar vor dem Erreichen der Zeit $\tau_{j_0+k}$. Hernach könnte schlechtestenfalls ein Zeitraum von weiteren $\varepsilon$ Sekunden vergehen, bis die nächste Messepoche erreicht wird. Da das Benutzerendgerät nahe der Zeit $\tau_{j_0} - \Delta_k$ gestartet worden sein könnte, beträgt die Zeitdifferenz im schlechtesten Falle $\tau_{j_0+k} - \tau_{j_0} + \Delta_k + \varepsilon$.

Dies wird an einem Beispiel verdeutlicht: Für normalisierte polynomiale B-Splines mit einfachen Knoten der Ordnung $k=2$, welche als zweites Funktionensystem verwendet werden, erhält man $\tau_{j_0+2} - \tau_{j_0} + \Delta_2 + \varepsilon$. Dies ist reduzierbar auf $2 + \Delta_2 + \varepsilon$ Sekunden, wenn die Knoten durch $\tau_l := \tau_0 + l$ gegeben sind für ein beliebiges aber festes $\tau_0$ und alle $l \in N$, d.h. ein Koeffizient pro Sekunde muss dann verbreitet werden. Im weiteren wird der spezielle Fall von ganzzahligen Messepochen mit aufeinander folgenden Zeiten $\varepsilon = 1s$ betrachtet. Um die oben erwähnte Zeit zum Erreichen der nächsten Messepoche nach $\tau_{j_0+k}$ gering zu halten, ist es empfehlenswert für - $\tau_0$ eine Zahl zu verwenden, die größer ist als die Signallaufzeit von irgendeinem Satelliten zu irgendeiner Benutzerposition auf der Erde einschließlich einer Marge für ungenaue Benutzeruhren von z.B. 100 ms. Auf diese Weise kann die time to first fix auf $2 + \Delta_2 + 0{,}1$ Sekunden reduziert werden - wenn die Zeitinformationen für die absolute Referenzierung periodisch mindestens innerhalb der gleichen Zeit übertragen werden. Der Wert von $\Delta_2$ muss zwischen 0 und 1 s gewählt werden.

Die Trennung zwischen zweitem und erstem Funktionensystem (d.h. Micro und Macro Advancing Function System) erlaubt es, verschiedenen Kombinationen von Anforderungen für die time to first fix und die Approximationsqualität nachzukommen, indem mehrere verschiedene zweite Funktionensysteme verwendet werden. Diese können bereit gestellt werden durch die Nutzung entweder des gleichen oder anderer Dienste als desjenigen Dienstes, der für die ersten Funktionensysteme verwendet wird.

Zur Generierung einer Parametrisierung von Satellitenorbits und/oder Satellitenuhrenkorrekturen eines Satelliten wird nach dem oben ausgeführten erfindungsgemäßen Verfahren davon ausgegangen, dass diese Orbits und/oder Uhrenkorrekturen bereits in einer anderen geeigneten Beschreibung vorliegen, z.B. in einer der für Navigationsnachrichten üblichen Formen oder im sog. SP3-Format.

In einer anderen Ausführungsform können die fortschreitenden Funktionensysteme direkt sowohl innerhalb des Berechnungsprozesses für restituierte präzise Orbits und Uhren als auch innerhalb des Prozesses zur Vorausberechnung von Orbits und Uhrenkorrekturen ausgenutzt werden. Dies weist den Vorteil auf, dass Orbit- und Uhrennachrichten erzeugt werden können, welche a priori bis zu einem gewissen Grad glatt sind. Außerdem können die Koeffizienten direkt verwendet werden und somit die Orbit- und Uhrkorrekturdaten verlustfrei bereit gestellt werden.

Die satellitengestützte Verbreitung von vorausberechneten Satellitenorbits und Satellitenuhren durch Navigationsnachrichten und die Verbreitung von präzisen Satellitenorbits und -uhren durch Dateien im sog. SP3-Format ist vollständig unterschiedlich. Die erfindungsgemäße Verwendung von Koeffizienten eines fortschreitenden Funktionensystems ermöglicht die vereinheitlichte Handhabung von beiden Datensätzen. Für geeignete fortschreitende Funktionensysteme gilt dies ohne Verringerung der Genauigkeit und Handhabbarkeit. Die Verwendung der normalisierten polynomialen B-Splines auf einem äquidistanten Gitternetz aus obigem konkreten Beispiel führt etwa zu einer Halbierung der Datenmenge im Vergleich zum SP3-Format und die Handhabung der Daten erfordert keine weiteren Methoden als beispielsweise die für B-Splines übliche Auswertungsrekursion.

## Patentansprüche

1. Verfahren zum Generieren einer Parametrisierung von Satellitenorbits und/oder Satellitenuhrenkorrekturen eines Satelliten, bei dem

   - zur Beschreibung des oder der Satellitenorbits und/oder der Satellitenuhrenkorrekturen ein erstes fortschreitendes System differenzierbarer Funktionen (erstes Funktionensystem) mit hoher Approximationsgüte und einem langen Wirkungsbereich vorgesehen ist,
   - die aus dem ersten Funktionensystem parametrisierten Satellitenorbits und/oder Satellitenuhrenkorrekturen von einer Bodenrecheneinheit an einen oder mehrere Satelliten und dann an ein Benutzergerät übertragen werden, oder von einer Bodenrecheneinheit ohne über das Raum-Segment zu gehen an ein Benutzergerät übertragen werden,
   **dadurch gekennzeichnet, dass**
   - zur Parametrisierung der Satellitenorbits und/oder der Satellitenuhrenkorrekturen zusätzlich ein zweites fortschreitendes System (zweites Funktionensystem) zumindest stetiger Funktionen mit moderater Approximationsgüte und sehr kurzem Wirkungsbereich vorgesehen ist, das eine Konversion zu dem ersten Funktionensystem erlaubt,
   - die aus dem zweiten Funktionensystem parametrisierten Satellitenorbits zusätzlich an das Benutzergerät übertragen werden,
   - das erste und das zweite Funktionensystem eine Sequenz von Funktionen $\left(\phi_i^{k,p}\left(\cdot;\left(\tau_l\right)_{l\in N}\right)\right)_{i\in N}$ mit den folgenden zwei Eigenschaften umfassen:

   für alle $i \in N$ ist die Funktion $\phi_i^{k,p}\left(\cdot;\left(\tau_l\right)_{l\in N}\right)$ p-fach stetig differenzierbar, so dass gilt:

   $$\phi_i^{k,p}\left(\cdot;\left(\tau_l\right)_{l\in N}\right)\in C^p\left(R\right),$$

   für alle $i \in N$ ist ein Träger der Funktion $\phi_i^{k,p}\left(\cdot;\left(\tau_l\right)_{l\in N}\right)$ in einem abgeschlossenen Intervall enthalten, das durch seine Endpunkte $\tau_i, \tau_{i+k}$ definiert ist, so dass gilt:

   $$\text{supp}\left(\phi_i^{k,p}\left(\cdot;\left(\tau_l\right)_{l\in N}\right)\right)\subseteq\left[\tau_i,\tau_{i+k}\right],$$ wobei für jede Funktion f der Träger definiert ist durch

   $\text{supp}(f):=\overline{\{x\in R|f(x)\neq 0\}}$, $N$ natürliche Zahlen inklusive der Null; $R$ reelle Zahlen; p und k gegebene natürliche Zahlen; a eine positive Zahl bezeichnen und $(\tau_l)_{l \in N}$ eine unendliche Folge sogenannter Knoten $(\tau_l)_{l \in N}$ ist, welche nicht notwendigerweise paarweise unterschiedlich sind; und wobei für alle $l \in N$ gilt: $\tau_{l+k} - \tau_l > \alpha$.

2. Verfahren nach Anspruch 1, bei dem die Konversion durch das Benutzergerät durchgeführt wird.

3. Verfahren nach Anspruch 2, bei dem für das zweite Funktionensystem alle an das Benutzergerät zu übertragenden Daten in dem oder den Satelliten gewonnen werden.

4. Verfahren nach einem der vorherigen Ansprüche, bei dem die Funktionen des ersten und/oder zweiten Funktionensystems glatt sind.

5. Verfahren nach einem der vorherigen Ansprüche, bei dem die Funktionen des ersten Funktionensystems lokale Träger aufweisen und die Anzahl der lokal, d.h. in einem beliebigen Zeitpunkt, beitragenden Funktionen auf einen vorgegebenen Wert begrenzt ist.

6. Verfahren nach einem der vorherigen Ansprüche, bei dem die Approximation der Satellitenorbits und/oder der Satellitenuhrenkorrekturen fortschreitend erfolgt.

7. Verfahren nach einem der vorherigen Ansprüche, bei dem durch Steuerung der Instruktionen für die Erzeugung des ersten und des zweiten Funktionensystems die Güte der Approximation und/oder die Anzahl der lokal beitragenden Funktionen gesteuert werden.

8. Verfahren nach einem der vorherigen Ansprüche, bei dem als erstes und/oder zweites Funktionensystem polynomiale B-Splines, nichtgleichförmige rationale B-Splines, verallgemeinerte B-Splines oder Wavelets mit lokalem Träger verwendet werden.

9. Verfahren nach einem der vorherigen Ansprüche, bei dem die Approximation durch eine Linearkombination der Funktionen des ersten und/oder des zweiten Funktionensystems ermittelt wird.

10. Verfahren nach Anspruch 9, bei dem ein Startintervall ermittelt wird und die Approximation einer gegebenen Funktion und deren Koeffizienten für dieses Startintervall ermittelt werden.

11. Verfahren nach Anspruch 10, bei dem ein dem Startintervall oder ein dem zuletzt aktuellen Intervall folgendes Folgeintervall derart ermittelt wird, so dass Endpunkte des Folgeintervalls von Endpunkten des Startintervalls bzw. des zuletzt aktuellen Intervalls unterschiedlich sind, wobei die Approximation der gegebenen Funktion für das Folgeintervall ermittelt wird, wobei zusätzlich zu den bereits über die Vorgängerintervalle bestimmten Approximationen der gegebenen Funktion

   - entweder nur Informationen bzgl. des aktuell betrachteten Intervalls
   - oder neben Informationen bzgl. des aktuell betrachteten Intervalls auch zukünftige Intervalle einfließen.

12. Verfahren nach einem der vorherigen Ansprüche, bei dem unterschiedliche erste und/oder zweite Funktionensysteme zur Approximation der Satellitenorbits und der Satellitenuhrenkorrekturen verwendet werden können.

13. Verfahren nach einem der vorherigen Ansprüche 6, 8, 10 oder 11, wonach

   - die Verbreitung der Informationen in etwa gleichmäßig über die Zeit verteilt mit oder ohne Wiederholungen erfolgt, oder
   - die Verbreitung der Informationen stoßweise, also mehrere Koeffizienten und/oder Parameter simultan, mit oder ohne Wiederholungen erfolgt.

14. Verfahren nach einem der vorherigen Ansprüche, bei dem unterschiedliche erste und/oder zweite Funktionensysteme zur Approximation der Satellitenorbits und der Satellitenuhrenkorrekturen unterschiedlicher Satelliten verwendet werden können.

15. Verfahren nach einem der Ansprüche 10 oder 11, bei dem zur Minimierung der Zeit bis die erste Position des Benutzergerätes gefunden ist, die ermittelten Koeffizienten und weiteren Koeffizienten, gleichförmig über die Zeit verteilt, insbesondere über eine eigenständige Übertragungsinfrastruktur, an das Benutzergerät übertragen werden.

16. Verfahren nach einem der obigen Ansprüche, bei dem die fortschreitenden Funktionensysteme direkt sowohl innerhalb des Berechnungsprozesses für restituierte präzise Orbits und Uhren als auch innerhalb des Prozesses zur Vorausberechnung von Orbits und Uhrenkorrekturen ausgenutzt werden.

17. Vorrichtung zum Generieren einer Parametrisierung von Satellitenorbits und/oder Satellitenuhrenkorrekturen, die Mittel zur Durchführung des Verfahrens nach einem der vorherigen Ansprüche aufweist.

**Claims**

1. Method for generating a parameterization of satellite orbits and/or satellite clock corrections of a satellite, in which

    - in order to describe the satellite orbit or orbits and/or the satellite clock corrections a first progressive system of differentiable functions (first function system) is provided with a high approximation quality and a long effective range,
    - the satellite orbits and/or satellite clock corrections parameterized from the first function system are transmitted from a ground arithmetic logic unit to one or more satellites and then to a user device, or are transmitted to a user device from a ground arithmetic logic unit without going over the space segment,
    **characterized in that**
    - in order to parameterize the satellite orbits and/or the satellite clock corrections, there is additionally provided a second progressive system (second function system) of at least continuous functions with moderate approximation quality and very short effective range, which permits a conversion to the first function system,
    - the satellite orbits parameterized from the second function system are additionally transmitted to the user device,
    - the first and the second function systems comprise a sequence of functions $\left(\phi_i^{k,p}\left(\cdot;\left(\tau_l\right)_{l\in N}\right)\right)_{i\in N}$ with the following two properties:

    for all $i \in N$, the function $\phi_i^{k,p}\left(\cdot;\left(\tau_l\right)_{l\in N}\right)$ is p-fold continuously differentiable such that it holds that:

    $$\phi_i^{k,p}\left(\cdot;\left(\tau_l\right)_{l\in N}\right) \in C^p(R),$$

    for all $i \in N$, a carrier of the function $\phi_i^{k,p}\left(\cdot;\left(\tau_l\right)_{l\in N}\right)$ is included in a closed interval which is defined by its end points $\tau_i, \tau_{i+k}$ such that it holds that:

    $$\text{supp}\left(\phi_i^{k,p}\left(\cdot;\left(\tau_l\right)_{l\in N}\right)\right) \subseteq \left[\tau_i, \tau_{i+k}\right],$$ the carrier being defined for each function by supp(f): = $\overline{\{x \in R | f(x) \neq 0\}}$;
    N signifying natural numbers including zero; $R$ signifying real numbers; p and k signifying given natural numbers; $\alpha$ signifying a positive number and $(\tau_l)_{l\in N}$ being an infinite sequence of so-called nodes $(\tau_l)_{l\in N}$ which do not necessarily differ in pairwise fashion; and $\tau_{l+k}-\tau_l > \alpha$ for all $l \in N$.

2. Method according to Claim 1, in which the conversion is carried out by the user device.

3. Method according to Claim 2, in which for the second function system all data to be transmitted to the user device are obtained in the satellite or satellites.

4. Method according to one of the preceding claims, in which the functions of the first and/or second function system(s) are smooth.

5. Method according to one of the preceding claims, in which the functions of the first function system have local carriers and the number of the functions contributing locally, that is to say at any desired instant, is limited to a prescribed value.

6. Method according to one of the preceding claims, in which the approximation of the satellite orbits and/or of the satellite clock corrections is performed progressively.

7. Method according to one of the preceding claims, in which the qualities of the approximation and/or the number of the locally contributing functions are controlled by controlling the instructions for the generation of the first and of the second function system.

8. Method according to one of the preceding claims, in which polynomial B splines, non-uniform rational B splines, generalized B splines or wavelengths with a local carrier are used as first and/or second function system.

9. Method according to one of the preceding claims, in which the approximation is determined by a linear combination of the functions of the first and/or the second function system.

10. Method according to Claim 9, in which a start interval is determined and the approximation of a given function and the coefficients thereof are determined for said start interval.

11. Method according to Claim 10, in which a subsequent interval following the start interval, or a subsequent interval following the last current interval is determined in such a way that end points of the subsequent interval differ from end points of the start interval or of the last current interval, the approximation of the given function being determined for the subsequent interval, in addition to the approximations of the given function already determined over the preceding intervals,

- either only information relating to the currently considered interval,
- or in addition to information relating to the currently considered interval, future intervals are also input.

12. Method according to one of the preceding claims, in which different first and/or second function systems can be used to approximate the satellite orbits or the satellite clock corrections.

13. Method according to one of the preceding Claims 6, 8, 10 or 11, in accordance with which

- the distribution of the information is performed in a fashion approximately uniformly distributed over time with or without repetitions, or
- the distribution of the information is performed in pulses, that is to say a plurality of coefficients and/or parameters are distributed simultaneously with or without repetitions.

14. Method according to one of the preceding claims, in which different first and/or second function systems can be used to approximate the satellite orbits and the satellite clock corrections of different satellites.

15. Method according to either of Claims 10 and 11, in which in order to minimize the time until the first position of the user device is found, the determined coefficients and further coefficients are distributed uniformly over time, in particular are transmitted to the user device via a self-contained transmission structure.

16. Method according to one of the above claims, in which the progressive function systems are utilized directly both within the calculation process for restituted precise orbits and clocks, and within the process for precalculating orbits and clock corrections.

17. Device for generating a parameterization of satellite orbits and/or satellite clock corrections which has means for carrying out the method according to one of the preceding claims.

**Revendications**

1. Procédé destiné à générer une paramétrisation d'orbites de satellites et/ou de corrections d'horloge de satellites d'un satellite, dans lequel

- il est prévu, pour décrire la ou les orbites de satellites et/ou les corrections d'horloge de satellites, un premier système progressif de fonctions différentiables (premier système de fonctions) présentant une qualité d'approximation élevée et un domaine de fonctionnement étendu,
- les orbites de satellites et/ou les corrections d'horloge de satellites paramétrées à partir du premier système de fonctions sont transmises par un calculateur sol à un ou plusieurs satellites puis à un appareil utilisateur, ou sont transmises par un calculateur sol sans passer par le segment spatial, à un appareil utilisateur,

**caractérisé en ce que**

- il est en outre prévu un second système progressif (second système de fonctions) comportant au moins des fonctions continues présentant une qualité d'approximation modérée et un domaine de fonctionnement très court pour paramétrer les orbites de satellites et/ou les corrections d'horloge de satellites, lequel second système de fonctions permet une conversion en le premier système de fonctions,

- les orbites de satellites paramétrées à partir du second système de fonctions sont en outre transmises à l'appareil utilisateur,

- les premier et second systèmes de fonctions comprennent une séquence de fonctions

$$\left( \phi_i^{k,p} \left( \cdot; (\tau_l)_{l \in N} \right) \right)_{i \in N}$$

présentant les deux propriétés suivantes :

pour tous les $i \in N$, la fonction $\phi_i^{k,p}(\cdot; (\tau_l)_{l \in N})$ est continûment différentiable p fois, de telle sorte que l'on a : $\phi_i^{k,p}(\cdot; (\tau_l)_{l \in N}) \in C^p(R)$,

pour tous les $i \in N$, un support de la fonction $\phi_i^{k,p}(\cdot; (\tau_l)_{l \in N})$ est contenu dans un intervalle fermé qui est défini par ses points d'extrémité $\tau_i, \tau_{i+k}$, de sorte que l'on a :

$$\mathrm{supp}\left( \phi_i^{k,p}(\cdot; (\tau_l)_{l \in N}) \right) \subseteq [\tau_i, \tau_{i+k}],$$

dans lequel, pour chaque fonction f, le support est défini par $\mathrm{supp}(f) := \overline{\{x \in R | f(x) \neq 0\}}$;

les $N$ sont des nombres naturels, y compris zéro ; les R sont des nombres réels ; p et k sont des nombres naturels donnés ; $\alpha$ est un nombre positif et $(\tau_l)_{l \in N}$ est une suite infinie d'éléments dits noeuds $(\tau_l)_{l \in N}$ qui ne sont pas nécessairement différents lorsqu'ils sont pris par paires ; et dans lequel, pour tous les $l \in N$, on a : $\tau_{l+k} - \tau_l > \alpha$.

2. Procédé selon la revendication 1, dans lequel la conversion est effectuée par l'appareil utilisateur.

3. Procédé selon la revendication 2, dans lequel, pour le second système de fonctions, toutes les données devant être transmises à l'appareil utilisateur sont obtenues dans le ou les satellites.

4. Procédé selon l'une quelconque des revendications précédentes, dans lequel les fonctions du premier et/ou du second système de fonctions sont lisses.

5. Procédé selon l'une quelconque des revendications précédentes, dans lequel les fonctions du premier système de fonctions présentent des supports locaux et le nombre des fonctions localement contributives, c'est-à-dire en un point quelconque dans le temps, sont limitées à une valeur prédéterminée.

6. Procédé selon l'une quelconque des revendications précédentes, dans lequel l'approximation des orbites de satellites et/ou des corrections d'horloge de satellites s'effectue de manière évolutive.

7. Procédé selon l'une quelconque des revendications précédentes, dans lequel la qualité de l'approximation et/ou le nombre des fonctions localement contributives sont commandés par commande des instructions destinées à générer le premier et le second système de fonctions.

8. Procédé selon l'une quelconque des revendications précédentes, dans lequel on utilise en tant que premier et/ou second système de fonctions des B-splines polynomiales, des B-splines rationnelles non uniformes, des B-splines généralisées ou des ondelettes à support local.

9. Procédé selon l'une quelconque des revendications précédentes, dans lequel l'approximation est déterminée par une combinaison linéaire des fonctions du premier et/ou du second système de fonctions.

10. Procédé selon la revendication 9, dans lequel un intervalle de départ est déterminé et l'approximation d'une fonction donnée et ses coefficients pour cet intervalle de départ sont déterminés.

11. Procédé selon la revendication 10, dans lequel on calcule un intervalle suivant faisant suite à l'intervalle de départ ou à un intervalle en cours de manière à ce que les points d'extrémité de l'intervalle suivant soient différents des points d'extrémité de l'intervalle de départ ou de l'intervalle en cours, dans lequel l'approximation de la fonction donnée pour l'intervalle suivant est calculée, dans lequel, en plus des approximations déjà déterminées de la fonction donnée sur les intervalles précédents,

- soit uniquement des informations concernant l'intervalle en cours considéré,
- soit des informations supplémentaires concernant l'intervalle en cours considéré sont également introduites dans des intervalles futurs.

**12.** Procédé selon l'une quelconque des revendications précédentes, dans lequel on peut utiliser des premiers et/ou des seconds systèmes de fonctions différents pour calculer l'approximation des orbites de satellites et des corrections d'horloge de satellites.

**13.** Procédé selon l'une quelconque des revendications 6, 8, 10 ou 11 précédentes, conformément auquel

- la diffusion des informations s'effectue de manière répartie de façon pratiquement uniforme dans le temps avec ou sans répétitions, ou
- la diffusion des informations s'effectue de manière discontinue, de sorte qu'une pluralité de coefficients et/ou de paramètres sont simultanément diffusés, avec ou sans répétitions.

**14.** Procédé selon l'une quelconque des revendications précédentes, dans lequel on peut utiliser des premiers et/ou des seconds systèmes de fonctions différents pour calculer l'approximation des orbites de satellites et des corrections d'horloge de satellites de différents satellites.

**15.** Procédé selon l'une quelconque des revendications 10 ou 11, dans lequel, pour minimiser le temps s'écoulant jusqu'à ce que la première position de l'appareil utilisateur soit trouvée, les coefficients calculés et d'autres coefficients sont transmis à l'appareil utilisateur de manière uniformément répartie dans le temps, notamment par l'intermédiaire d'une structure de transmission autonome.

**16.** procédé selon l'une quelconque des revendications précédentes, dans lequel les systèmes de fonctions progressifs sont exploités directement tant au cours du processus de calcul destiné à restituer de manière précise les orbites et les horloges, qu'au cours du processus destiné à calculer les orbites et les corrections d'horloge.

**17.** dispositif destiné à générer une paramétrisation d'orbites de satellites et/ou de corrections d'horloge de satellites, comprenant des moyens destinés à mettre en oeuvre le procédé selon l'une quelconque des revendications précédentes.

Fig. 1

Fig. 2

B-Spline (orbit-) navigation message, year 2005, days 278-280

B-Spline (clock-) navigation message, year 2005, days 278-280

Fig. 3

**Fig. 4**

B–Spline (orbit-) navigation message, year 2006, days 146–150

B–Spline (clock–) navigation message, year 2006, days 146–150

Fig. 5

Fig. 6

B-Spline (orbit-) navigation message, year 2007, days 243-245

B-Spline (clock-) navigation message, year 2007, days 243-245

**Fig. 7**

B-Spline (orbit-) navigation message, year 2007, days 257-259

B-Spline (clock-) navigation message, year 2007, days 257-259

Fig. 8

B-Spline (orbit-) navigation message, year 2005, 61 days from the beginning of march

B-Spline (clock-) navigation message, year 2005, 61 days from the beginning of march

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060290566 A1

**In der Beschreibung aufgeführte Nicht-Patentliteratur**

- **PAULA KORVENOJA et al.** Efficient Satellite Orbit Approximation. *Proc. of the 13th Int. Technical Meeting of the Satellite Division of The Institute of Navigation (ION GPS 2000),* 19. September 2000, 1930-1937

- **JAY H KWON et al.** Kinematic Orbit Determination of Low Earth Orbiter using Triple Differences. *Proc. of the 2002 National Technical Meeting of The Institute of Navigation,* 28. Januar 2002, 762-777